# EUROPÄISCHE PATENTSCHRIFT

(11) **EP 4 436 744 B1**
(45) Veröffentlichungstag und Bekanntmachung des Hinweises auf die Patenterteilung: **30.07.2025**
(21) Anmeldenummer: 22768619.3
(22) Anmeldetag: 16.08.2022
(51) Int. Cl.: B23K 26/0622, B23K 26/36, B29C 71/04, B29D 11/00, B29D 11/02, B29C 35/08

(54) **KUNSTSTOFF SOWIE VERFAHREN ZUM BEARBEITEN EINES KUNSTSTOFFS**
PLASTIC MATERIAL, AND METHOD FOR PROCESSING A PLASTIC MATERIAL
MATIÈRE PLASTIQUE ET PROCÉDÉ DE TRAITEMENT D'UNE MATIÈRE PLASTIQUE

(30) Priorität: 25.11.2021 DE 102021005859; 22.02.2022 DE 102022000647
(43) Veröffentlichungstag der Anmeldung: 02.10.2024
(73) Patentinhaber: AIXLens GmbH, 52477 Alsdorf (DE)
(72) Erfinder: POPRAWE, Reinhart, 52074 Aachen (DE); VON WALLFELD, Axel, 52134 Herzogenrath (DE); CLASEN, Uwe, 52072 Aachen (DE)
(74) Vertreter: Castell, Klaus
(86) Internationale Anmeldenummer: PCT/DE2022/000093
(87) Internationale Veröffentlichungsnummer: WO 2023/093926

(56) Entgegenhaltungen:
- EP-A2- 0 291 459
- DE-A1- 102017 002 986
- DE-B4- 102017 002 986

## Beschreibung

Die Erfindung betrifft ein Verfahren zum Bearbeiten eines Kunststoffs, bei dem der Kunststoff mit einem Laser bearbeitet wird.

Beim Materialabtrag oberhalb der Verdampfungsschwelle oder einer Materialmodifikation unterhalb der Verdampfungsschwelle kann abhängig von der Art des Kunststoffs und den Bearbeitungsparametern insbesondere bei Duroplasten eine Entnetzung oder Depolymerisation des Kunststoffes auftreten, die die Eigenschaften des Kunststoffes negativ beeinflusst. Dies betrifft mechanische und chemische Eigenschaften, wie beispielsweise Festigkeit, Elastizität, Biegewechselbeständigkeit, Inertheit und Löslichkeit. Darüber hinaus betrifft die Erfindung einen Kunststoff, insbesondere ein Augenimplantat oder eine Intraokularlinse, die mindestens einen Bereich aufweisen, in dem Kunststoff mit einem Laser verdampft oder modifiziert wurde.

Es ist bekannt, Kunststoffe mit einem Laser zu behandeln, um einen Materialabtrag und/oder eine Politur der Oberfläche zu erreichen. Ein Beispiel einer derartigen Bearbeitung eines Kunststoffs zeigt die DE 10 2017 002 986 B4. Hier wird am Beispiel einer Intraokularlinse gezeigt, wie mit einem Laser ein Materialabtrag erzielt werden kann und außerdem mit dem Laser auch eine Politur der Oberfläche erreicht werden kann.

Die US 2017/0371180 A1 beschreibt ein Verfahren zur Herstellung einer Kontaktlinse, bei dem in der Kontaktlinse ein innerer Hohlraum mit einem wasserlöslichen Polymer befüllt wird. Hierfür wird mit einem Laser eine Bohrung von der Außenseite der Kontaktlinse zum Hohlraum erzeugt und das wasserlösliche Material im Hohlraum dann mit UV-Licht löslich gemacht. Letztlich wird die Bohrung wieder verschlossen.

Die vorliegende Erfindung betrifft jedoch nicht nur die Behandlung von Intraokularlinsen, Augenimplantaten, Methacrylatkunststoffen oder Thermoplasten, sondern allgemein die Bearbeitung von Kunststoff, bei der der Kunststoff mit einem Laser bearbeitet wird.

Die Laserbearbeitungsverfahren zum Verdampfen von Kunststoff oder auch nur zum Modifizieren oder Anschmelzen von Kunststoff verändern die Vernetzung der Moleküle im Kunststoff. Dadurch verändern sich auch die Eigenschaften des Kunststoffs zumindest in dem Bereich, in dem der Kunststoff bearbeitet wurde. Dies betrifft beim Abtrag und beim Anschmelzen insbesondere die Geometrie. Beim Anschmelzen und Modifizieren aber auch die mechanischen und chemischen Eigenschaften, insbesondere auch den Brechungsindex an der Oberfläche oder im Volumen des Kunststoffes.

Im Rahmen der Erfindung wird unter einem Kunststoff ein Festkörper verstanden, dessen Grundbestandteil synthetisch oder halbsynthetisch erzeugte Polymere mit organischen Gruppen sind. Synthetische Kunststoffe werden durch Polymerisation (Polyaddition, Polykondensation usw.) aus Monomeren erzeugt.

Bei der thermischen Behandlung von Kunststoffen, wie insbesondere beim Schmelzen und Verdampfen, oder auch um den Brechungsindex im Material zu verändern, wird der Vernetzungsgrad reduziert. Dadurch sinken die Härte, die Zähigkeit und der Schmelzpunkt und es erhöht sich die Löslichkeit. Dadurch wird die Bearbeitung des Kunststoffs erleichtert und dies ermöglicht es, beispielweise einen Rohling oder einem mit einem Laser vorbehandelten Rohling mit einem Polierlaser weiter zu bearbeiten.

Nach der Politur des Rohlings mit einem Polierlaser hat der Kunststoff jedoch weiterhin einen niedrigeren Vernetzungsgrad als der unbehandelte Rohling. Dies führt dazu, dass der Kunststoff nicht mehr so hart und zäh ist wie der unbehandelte Rohling.

Der Erfindung liegt daher die Aufgabe zu Grunde, Kunststoffe derart zu bearbeiten oder nachzubearbeiten, dass die mit der Entnetzung des Kunststoffs einhergehenden Nachteile kompensiert oder zumindest minimiert werden.

Erfreulicherweise hat sich herausgestellt, dass dieses Problem mit einem Verfahren mit den Merkmalen des Patentanspruchs 1 gelöst werden konnte und auch mit einem Kunststoff nach Anspruch 15 wird das der Erfindung zugrunde liegende Problem gelöst.

Der Erfindung liegt die Erkenntnis zu Grunde, dass auch eine Variation der Verfahren zu Abtrag, Anschmelzen oder Modifikation des Kunststoffs sogar mit Hilfe von UKP-Lasern mit Pulsdauern von unter 1 ns und Pulsenergien von 0,1 µJ bis 10 µJ zu einer Beeinträchtigung des bearbeiteten Kunststoffs führen. Anstelle den Bearbeitungsprozess immer weiter zu optimieren, liegt der Erfindung die Erkenntnis zu Grunde, dass der Kunststoff nach der Laserbearbeitung bestrahlt werden kann, um zumindest teilweise wieder eine Vernetzung des Kunststoffes zu erzielen.

Zur Bestrahlung eignet sich eine Partikelstrahlung. Als Partikelstrahlung können Elektronenstrahlen, Gammastrahlen oder auch Photonen, insbesondere UV-Photonen eingesetzt werden. Die Strahlung aktiviert die entnetzten Polymerkettenteile in Form von elektronischer Anregung oder Ionisation, die daraufhin zu verstärkter Vernetzung mit anderen Polymerkettenteilen führen. Versuche mit einer Variation der Partikelenergie und der Partikelstrahlleistung im Hinblick auf die eingebrachte Leistung pro Fläche betätigen den Effekt.

Entgegen den bisherigen Ansätzen wird somit erfindungsgemäß kein neues Verfahren zur Verringerung der Entnetzung des Kunststoffs bei der Laserbearbeitung vorgeschlagen, sondern die Entnetzung des Kunststoffs während der Bearbeitung mit dem Laser wird akzeptiert und anschließend wird der Kunststoff bestrahlt, um zumindest teilweise wieder eine Vernetzung des Kunststoffs zu erzielen. Dadurch kann die Entnetzung des bearbeiteten Rohlings verringert werden, der Kunststoff kann nach seiner Bearbeitung wieder die Eigenschaften des Rohlings haben und es kann sogar eine gegenüber dem Vernetzungsgrad des Rohlings stärkere Vernetzung erzielt werden, um die Härte, die Zähigkeit und den Schmelzpunkt zu erhöhen und die Löslichkeit zu verringern.

Der Kunststoff wird somit einem Anschlussverfahren unterzogen, mit dem die vorher beim Polieren erfolgte Reduktion der Viskosität durch Verkürzung der Polymerketten nun wieder in umgekehrter Richtung durch eine Vernetzung aufgehoben wird und so vorzugsweise die ursprünglichen Werte des Materials bzgl. Härte, Löslichkeit und Zähigkeit wieder weitgehend erreicht werden. Das kann außerhalb einer Linse an ihrer Oberfläche, aber auch innerhalb des Materials der Linse geschehen. Eine zusätzliche Vernetzung ist wegen der Polierprozesse und der Widerherstellung der Ausgangseigenschaften in der Regel an den Oberflächen und insbesondere den äußeren Oberflächen sinnvoll und dies kann besonders vorteilhaft mit Partikelstrahlen erreicht werden.

Eine mögliche Behandlung des Kunststoffs zur Steigerung der Vernetzung wäre die Behandlung mit Vernetzungsmitteln. Derartige Vernetzungsmittel zeichnen sich durch mindestens zwei reaktive Gruppen aus. Vernetzer mit zwei gleichen reaktiven Gruppen werden als homobifunktionelle Vernetzer bezeichnet, solche mit zwei unterschiedlichen Gruppen dagegen als heterobifunktionelle Vernetzer.

Die Vernetzung bereits bestehender Polymerketten wird als Quervernetzung bezeichnet und kann entweder über bereits im Polymer vorhandene Funktionalitäten durch geschickte Wahl der Reaktionsbedingungen erfolgen oder durch den Einsatz von multifunktionellen, niedermolekularen Substanzen bewerkstelligt werden.

Je nach Vernetzungsgrad entstehen durch die Vernetzung von Polymeren zuerst Elastomere und bei zunehmender Vernetzung auch Duroplaste.

Erfindungsgemäß wird jedoch kein übliches Vernetzungsmittel verwendet, sondern der Kunststoff wird nach der Entnetzung bestrahlt. Die Bestrahlung ermöglicht es, den zuvor mit einem Laserstrahl behandelten Kunststoff anschließend mit einer speziellen, auf eine Erhöhung der Vernetzung abgestimmten, Bestrahlung zu behandeln.

Während die Bestrahlung mit dem Laser bei Abtrag, Anschmelzen, Polieren oder Modifikation zu einer Entnetzung des Kunststoffs führt, führt eine Bestrahlung mit anderen Strahlen oder Parametern zu einer Vernetzung des Kunststoffs.

Das erfindungsgemäße Verfahren erlaubt es somit, ausschließlich durch Bestrahlung und somit berührungslos einen Kunststoff bis hin zur Verdampfung oder Politur zu bearbeiten und anschließend auch berührungslos wieder zu härten bzw. zu einer Verbesserung der Materialeigenschaften zu führen.

Diese Verfahrensschritte können in direktem Anschluss nacheinander durchgeführt werden. Sie können auch parallel durchgeführt werden, wobei das Entnetzen bei der Bearbeitung des Rohlings mit dem Laser fokussiert im Innenbereich des Rohlings und/oder an dessen Oberfläche eintritt und die Strahlenbehandlung mit der Partikelstrahlung diesem Entnetzungsprozess entgegenwirkt. Um Kunststoffteile in einem fortlaufenden Prozess bearbeiten zu können, können diese auf einer Fördereinrichtung durch Behandlungsstationen, wie beispielsweise Rohling einlegen, Abtragen, Polieren, Vernetzen, Endreinigen, Endkontrolle, Verpackung geführt werden. Es kann aber auch ein stationärer Rohling mit einem Laser bearbeitet und bestrahlt werden. Hierbei ist es besonders einfach, die zeitliche Abfolge der Verfahrensschritte festzulegen und zu variieren.

Die Kunststoffteile können durch die Strahlung bei der Bearbeitung erwärmt werden, um den Prozess zu beschleunigen. Sie können jedoch auch beispielsweise mit einer separat eingebrachten Infrarotstrahlung erwärmt werden, insbesondere um das Polieren und/oder das Vernetzen zu beschleunigen.

Für das erfindungsgemäße Verfahren eignen sich als Kunststoff vor allem Duroplaste und Thermoplaste, die durch die Bestrahlung jedoch auch derart vernetzt werden können, dass ein Elastomer oder ein Duroplast entsteht.

Besonders bevorzugt für die Bearbeitung mit einem Laser und anschließend mit einer Strahlung für die Vernetzung eignet sich als Kunststoff ein Acrylat oder Methacrylat.

Das beschriebene Verfahren eignet sich in besonderer Weise auch für die Herstellung von Implantaten. Die Laserbearbeitung ermöglicht es, aus einem Rohling ein spezielles Implantat und vorzugsweise auch ein auf die spezielle chirurgische Behandlung abgestimmtes Implantat herzustellen und dieses Implantat anschließend über die Vernetzung des Kunststoffs wieder zu härten. Die berührungslose Behandlung des Kunststoffs führt dazu, dass ein als Implantat taugliches Kunststoffmaterial durch die Bearbeitung zwar entnetzt und wieder vernetzt wird, aber letztlich eine ähnliche oder gleiche Vernetzung hat wie das Ausgangsmaterial. Dadurch werden Probleme vermieden, die dadurch entstehen könnten, dass ein für die Herstellung von Implantaten zugelassener Kunststoff durch die Behandlung mit dem Laser und die damit einhergehende Entnetzung eine derartige Materialveränderung erfährt, dass er als Implantat nicht mehr geeignet ist.

Gute Erfahrungen wurden mit dem Einsatz des Verfahrens für ein Augenimplantat und insbesondere für eine Intraokularlinse erzielt.

Besonders geeignet für eine erfindungsgemäße Bearbeitung eines Kunststoffs ist die Bearbeitung des Kunststoffs mit einem Ultrakurzpulslaser (UKP-Laser), da hierbei eine besonders präzise Veränderung des Kunststoffs erzielt werden kann, die von einer partiellen Veränderung der Materialeigenschaften über eine Verdampfung von Materialbereichen bis hin zu einer anschließenden Politur durch ein Anschmelzen von Material auf der Kunststoffoberfläche reicht.

Um bestimmte Kunststoffkörper für den Einsatz beispielsweise als mechanisches Bauteil oder als Implantat herstellen zu können, ist es vorteilhaft, wenn bei der Bearbeitung ein Teil des Kunststoffs mit dem Laser verdampft oder im Inneren des Rohlings im Brechungsindex modifiziert wird. Außerdem kann bei der Bearbeitung der Kunststoff mit dem Laser poliert werden, indem bestimmte Materialbereiche abgetragen werden oder auch eine Verflüssigung und damit eine verstärkte Wirkung der Oberflächenspannung hinsichtlich einer Glättung erreicht wird, um mikroskopische Strukturierungen auf der Oberfläche zu vermeiden.

Eine einfache Bearbeitung des Kunststoffs wird dadurch erzielt, dass der Kunststoff mit dem Laser an der Oberfläche des Kunststoffs bearbeitet wird. Auch eine Bearbeitung der Oberfläche des Kunststoffs hat jedoch zwangsläufig auch eine Bearbeitung von Bereichen des Kunststoffs zur Folge, die unter der Oberfläche im Inneren des Kunststoffs liegen.

Neben einer derartigen oberflächennahen Bearbeitung kann der Laserstrahl auch dazu genutzt werden, gezielt im Inneren des Kunststoffs den Kunststoff zu bearbeiten. Hierbei sind insbesondere Kunststoffbereiche angesprochen, die mindestens 0,2 mm von der Oberfläche des Kunststoffs entfernt sind.

Durch die Abstimmung der Entnetzung mit dem Laser und der Vernetzung mit der Bestrahlung können auf einem Flächenbereich oder in einem Volumenbereich des Rohlings bestimmte vordefinierte Materialeigenschaften eingestellt werden.

Am gleichen Punkt kann eine Erhöhung der Entnetzung durch eine Erhöhung der Vernetzung ausgeglichen werden oder die gewünschten Materialeigenschaften werden durch das Zusammenwirken von einer definierten Entnetzung und einer definierten Vernetzung eingestellt.

Die definierte Einstellung von Materialeigenschaften kann aber auch dazu genutzt werden, an unterschiedlichen Punkten, Flächen- oder Volumenbereichen eine unterschiedlich intensive Entnetzung und Vernetzung vorzusehen. Dadurch bekommt der Rohling unterschiedliche Materialeigenschaften, je nachdem, welcher Bereich des Rohlings betrachtet wird.

Beispielsweise kann der Rohling äußere Oberflächenbereiche aufweisen, die durch die Bestrahlung besonders gehärtet sind, und innere Bereiche, die durch die Bestrahlung weniger intensiv gehärtet sind.

Somit kann beispielsweise bei einer Linse auf dem Weg eines durch die Linse gehenden Lichtstrahls die Brechung in einem Bereich erhöht und in einem anderen Bereich verringert oder erhöht werden, um die durch die Bearbeitung des Rohlings bewirkte Veränderung auszugleichen oder eine bestimmte Brechung zu erzielen.

Wie beim Laser Gesamtdauer, Impulsdauer und Intensität variiert werden können, können diese Parameter auch dazu verwendet werden, die Wirkungen der Bestrahlung auf die Materialeigenschaften im bestrahlten Bereich zu variieren.

Um den Kunststoff nach der Entnetzung zu bestrahlen, um zumindest teilweise wieder eine Vernetzung des Kunststoffs zu erzielen, wird eine Bestrahlung mit Photonen vorgeschlagen.

Als vorteilhaft hat sich jedoch auch eine Bestrahlung des Kunststoffs mit Elektronen, Beta- oder Gammastrahlung erwiesen.

Die Behandlung von Kunststoffen mit hochenergetischer Elektronen-, Beta- oder Gammastrahlung verleiht dem eingesetzten Kunststoff die thermischen, mechanischen und chemischen Eigenschaften von Hochleistungskunststoffen. Dies ermöglicht es für das Verfahren auch preiswerte Massenkunststoffe einzusetzen. Die Strahlenvernetzung kann dabei nach der Formgebung als letzter Verarbeitungsschritt in der Prozesskette erfolgen. Die besondere Bearbeitung, insbesondere die dadurch erzielte Härte der Oberfläche, ermöglicht es, die Kunststoffteile auch lose in Gitterboxen oder Kartons zu verpacken. Durch eine exakt festgelegte Dosis an Strahlen kann die Vernetzung präzise gesteuert werden. Die Materialeigenschaften können im Voraus genau definiert und durch eine punktgenaue Bestrahlung erreicht werden. Durch eine Abschirmung lässt sich der Vernetzungsgrad sogar innerhalb eines Formteils variieren. Dadurch kann ein Kunststoffteil unterschiedliche Härten aufweisen.

Anders als bei den chemischen Vernetzungsverfahren findet die Strahlenvernetzung bei niedrigen Temperaturen statt; dies erleichtert die Bearbeitung.

Besonders gute Erfahrungen wurden mit der Vernetzung von Polyethylen (PE), Polyamid (PA), Polybutylenterephthalat (PBT) und Polyvinylchlorid (PVC) erzielt. Außerdem eignet sich das erfindungsgemäße Verfahren für thermoplastische Elastomere (TPE) und Polypropylen (PP), aber auch für Duroplaste wie Methacrylate und Polymethacrylate.

Erfindungsgemäß ist daher auch ein Kunststoff, insbesondere ein Augenimplantat oder eine Intraokularlinse, der mindestens einen Bereich aufweist, in dem der Kunststoff mit einem Laser bearbeitet wurde, und dabei mit dem Laser eine Entnetzung des Kunststoffs erfolgt und der Kunststoff zumindest in einem Bereich nachbehandelt ist, um den Kunststoff wieder zu vernetzen. Eine derartige Bearbeitung mit einem Laser ist beispielsweise das Verdampfen eines Teils des Kunststoffs oder auch das Polieren des Kunststoffs durch eine Veränderung der Oberfläche des Kunststoffs.

Besonders bevorzugte Kunststoffe sind in diesem Bereich nach dem Verdampfen eines Teils des Kunststoffs poliert und sie wurden nachbehandelt, um den Kunststoff wieder zu vernetzen.

Sofern im Rahmen dieser Erfindung von Kunststoff gesprochen wird, sind hierbei beliebige Kunststoffe als Rohmaterialien, als Formteile oder beliebige Kunststoffteile, wie mechanische Elemente oder Implantate oder auch Kunststoffoberflächen oder Kunststoffbereiche innerhalb eines anderen Bauteils gemeint.

Ein erfindungsgemäßes Ausführungsbeispiel beschreibt die Herstellung einer Intraokularlinse. Diese Linse wird aus einem Rohling hergestellt, an dem zunächst mit einem Abtragslaser ein Materialabtrag erzielt wird. Dabei wird ein Bereich des Rohlings, in dem der Laser auf den Rohling trifft, verdampft. Dieser Materialabtrag von 0,01 bis 10 µm/Puls wird mit einem Laser mit einer Pulsenergie von 0,1 µJ bis 10 µJ erzielt. Die Pulsdauer des UKP-Lasers ist hierbei kleiner als 1 ns und die Laserwellenlänge liegt bevorzugt zwischen 193 nm und 370 nm. Vorteilhaft ist ein Fokusdurchmesser zwischen 5 und 5 µm.

Der aus einem Acrylat bestehende Rohling wird dabei zunächst durch Verdampfen von Oberflächenbereichen verformt, sodass er annähernd die vorbestimmte Endform erreicht. Anschließend wird der Rohling mit einem Polierlaser weiter bearbeitet.

Da dies zu einer Entnetzung in den Bearbeitungsbereichen führt, wird der Rohling anschließend zumindest in diesen Bereichen mit einer Elektronen-, Beta- oder Gammastrahlung behandelt. Die Behandlung dauert so lange, dass die bearbeitete Oberfläche zumindest wieder den Vernetzungsgrad des Rohlings erreicht hat oder sogar zumindest partiell einen höheren Vernetzungsgrad aufweist.

Dadurch ist es möglich, Kunststoffteile und insbesondere auch medizinische Implantate mit einer besonders harten und lösungsmittelresistenten und somit bioresistenten Oberfläche herzustellen.

Die Kombination aus entnetzendem Verfahren mittels eines Lasers und eines vernetzenden Verfahrens mittels einer Strahlenbehandlung ermöglicht es, das Kunststoffteil auch mit unterschiedlichen Dichten herzustellen. So kann beispielsweise eine mit dem Verfahren hergestellte Intraokularlinse zum Schutz an der Oberfläche eine härtere, das heißt besser vernetzte, Kunststoffschicht aufweisen als im Inneren. Es können in einem Querschnitt durch ein Kunststoffteil Vernetzungsgradienten erzielt werden und durch die vorbestimmte Vernetzung kann der Brechungsindex im Inneren oder auch im Inneren der Linse gezielt variiert werden.

Dies ermöglicht es nicht nur über die Materialeigenschaften und Formgebung an der Oberfläche des Kunststoffkörpers und insbesondere der Linse den Strahlengang eines durch den Kunststoffkörper gehenden Lichtstrahls zu beeinflussen, sondern auch durch die voreingestellte Materialdichte im Kunststoff und insbesondere auch durch einen Dichtegradienten innerhalb des Kunststoffs.

Ein bevorzugtes Ausführungsbeispiel sieht vor, dass ein Kunststoffrohling bei der Laserbearbeitung modifiziert wird und anschließend derart bestrahlt wird, dass der Kunststoff danach wieder die Materialeigenschaften des Kunststoffrohlings aufweist.

Zur Bearbeitung des Kunststoffs mit einem Laser sind insbesondere die in der DE 10 2017 002 986 A1 beschriebenen Verfahren besonders vorteilhaft.

Ein Ausführungsbeispiel ist in der Figur dargestellt und wird im Folgenden beschrieben.

Es zeigt die einzige Figur schematisch eine Seitenansicht einer Bearbeitungsanlage.

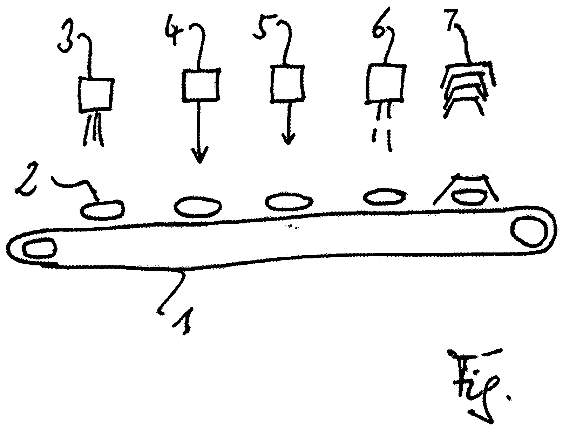

Das in der Figur 1 gezeigte Förderband 1 führt Linsen 2 (nur exemplarisch beziffert) an mehreren Bearbeitungsstationen vorbei. Nur exemplarisch wird als erste Bearbeitungsstation ein IR Strahler 3 gezeigt, der die Linse 2 erwärmt. Die nächste Bearbeitungsstation ist ein Laser 4, der gezielt die Form der Linse verändert. Dann kommt eine Bearbeitungsstation mit einem Laser 5, der die Oberfläche der Linse poliert. Die vierte Station ist ein Strahler 6 für hochenergetische Elektronen-, Beta- oder Gammastrahlung. Die letzte Station ist eine Packstation 7, an der die Linse 3 steril verpackt wird.

Als Alternative können die Linsen auch stationär positioniert werden und es werden unterschiedliche Bearbeitungsstationen an den Linden vorbeigeführt. Außerdem ist auch eine Kombination dieser beiden Bearbeitungsweisen durchführbar.

Die Bestrahlung, die der Vernetzung dient, kann mit Elektronenstrahlen durchgeführt werden. Dabei kann eine Elektronenenergie von E = 150 keV - 300 keV, im Grenzfall auch bis 1,5 MeV verwendet werden. Die mittlere Leistung des Elektronenstrahles liegt dann beispielsweise bei P = 1-5 kW.

Eine sinnvolle Dosisleistung kann bei PD = 50-500 kGy (kilo-Grey) liegen. Diese Dosis kann auch in mehreren nacheinander aufgebrachten Dosen erfolgen. Hierfür kann der Strahler das Werkstück auch mehrmals überfahren, um letztendlich die gewünschte Gesamtdosis aufzubringen, um die gewünschte Vernetzung zu erzielen.

In der Praxis lag die bestrahlte Fläche A bei 2 x 20 cm. Hieraus ergeben sich Intensitäten I von 0,5 kW/cm2 - 3 kW/cm2. Als Vorschubgeschwindigkeit für die oben genannten Flächen eignet sich V = 3 - 10 cm/s.

Um eine entsprechende Intensität je Fläche zu erzielen können die Daten nach oben oder unten skaliert werden.

Bei stationärer Bestrahlung errechnen sich entsprechende Intensitäten, Bestrahlungsdauern und Dosisleistungen.

Die in der DE 10 2017 002 986 A1 beschriebenen Verfahren sind Werte für eine übliche Bearbeitung eines Kunststoffrohlings mit einem Laser. Dabei entsteht eine Entnetzung, die anschließend wieder ausgeglichen werden sollte. Oder es werden durch ein vorbestimmtes Zusammenwirken von Entnetzung und Vernetzung die Materialeigenschaften des Kunststoffrohlings gezielt an dessen Oberfläche und gegebenenfalls auch in dessen inneren Volumen verändert.

Die spezielle Bearbeitung, die in der DE 10 2017 002 986 B4 beschrieben ist, beschreibt auch für das Ausführungsbeispiel den Prozessschritt der Entnetzung, auf den der.in dieser Anmeldung beschriebene Prozessschritt der Vernetzung folgt.

## Patentansprüche

1. Verfahren zum Bearbeiten des Kunststoffs eines Kunststoffkörpers, bei dem der Kunststoff mit einem Laser bearbeitet und mindestens teilweise modifiziert wird, beim Bearbeiten des Kunststoffs mit dem Laser Kunststoff in einem Bearbeitungsbereich abgetragen wird, dabei oder anschließend der Bearbeitungsbereich mit dem Laser oder einem weiteren Laser poliert wird, ***dadurch gekennzeichnet, dass*** der Kunststoff entnetzt und anschließend bestrahlt wird, um zumindest teilweise wieder eine Vernetzung des Kunststoffs zu erzielen und der Kunststoff in diesem polierten Bearbeitungsbereich bestrahlt wird.

2. Verfahren nach Anspruch 1, ***dadurch gekennzeichnet, dass*** der Bearbeitungsbereich an der äußeren Oberfläche des Kunststoffkörpers ist.

3. Verfahren nach einem der vorhergehenden Ansprüche, ***dadurch gekennzeichnet, dass*** der Kunststoff ein Acrylat und bevorzugt ein Methacrylat ist.

4. Verfahren nach einem der vorhergehenden Ansprüche, ***dadurch gekennzeichnet, dass*** der Kunststoff ein Augenimplantat ist.

5. Verfahren nach einem der vorhergehenden Ansprüche, ***dadurch gekennzeichnet, dass*** der Kunststoff eine Sehhilfe wie insbesondere eine Intraokularlinse oder eine Kontaktlinse ist.

6. Verfahren nach einem der vorhergehenden Ansprüche, ***dadurch gekennzeichnet, dass*** der Laser ein UKP Laser ist.

7. Verfahren nach einem der vorhergehenden Ansprüche, ***dadurch gekennzeichnet, dass*** bei der Bearbeitung ein Teil des Kunststoffs mit dem Laser verdampft wird.

8. Verfahren nach einem der vorhergehenden Ansprüche, ***dadurch gekennzeichnet, dass*** bei oder nach der Bearbeitung der Kunststoff mit dem Laser poliert wird.

9. Verfahren nach einem der vorhergehenden Ansprüche, ***dadurch gekennzeichnet, dass*** der Kunststoff mit dem Laser an der Oberfläche des Kunststoffs bearbeitet wird.

10. Verfahren nach einem der vorhergehenden Ansprüche, ***dadurch gekennzeichnet, dass*** der Kunststoff mit dem Laser zumindest auch im Inneren des Kunststoffs bearbeitet wird.

11. Verfahren nach einem der vorhergehenden Ansprüche, ***dadurch gekennzeichnet, dass*** der Kunststoff mit Partikelstrahlen, insbesondere Elektronenstrahlen, bestrahlt wird.

12. Verfahren nach einem der vorhergehenden Ansprüche, ***dadurch gekennzeichnet, dass*** der Kunststoff mit Photonen wie insbesondere Gammastrahlung bestrahlt wird.

13. Verfahren nach einem der vorhergehenden Ansprüche, ***dadurch gekennzeichnet, dass*** der Kunststoff mit Betastrahlung bestrahlt wird.

14. Verfahren nach einem der vorhergehenden Ansprüche, ***dadurch gekennzeichnet, dass*** ein Kunststoffrohling bei der Laserbearbeitung modifiziert wird und anschließend derart bestrahlt wird, dass der Kunststoff danach wieder die Materialeigenschaften des Kunststoffrohlings aufweist.

15. Kunststoff, insbesondere Augenimplantat oder Intraokularlinse, der mindestens einen Bereich aufweist, in dem der Kunststoff mit einem Laser bearbeitet und dadurch mindestens teilweise modifiziert wurde, ***dadurch gekennzeichnet, dass*** dieser Bereich nachbehandelt wurde, um den Kunststoff wieder zu vernetzen, wobei der Kunststoff in diesem Bereich nach dem Verdampfen eines Teils des Kunststoffs poliert wurde.

## Claims

1. A method for processing the plastic material of a plastic material object, in which the plastic material is processed with a laser and at least partially modified, during processing of the plastic material with the laser, plastic material is ablated in a processing region, at the same time or subsequently the processing region is polished with the laser or with another laser, **characterized in that** the plastic material is de-crosslinked and then irradiated in order to at least partially regain a crosslinking of the plastic material and the plastic material is irradiated in this polished processing region.

2. The method as claimed in claim 1, ***characterized in that*** the processing region is on the outer surface of the plastic material object.

3. The method as claimed in one of the preceding claims, ***characterized in that*** the plastic material is an acrylate and preferably a methacrylate.

4. The method as claimed in one of the preceding claims, ***characterized in that*** the plastic material is an ocular implant.

5. The method as claimed in one of the preceding claims, ***characterized in that*** the plastic material is an aid to vision such as, in particular, an intraocular lens or a contact lens.

6. The method as claimed in one of the preceding claims, ***characterized in that*** the laser is a USP laser.

7. The method as claimed in one of the preceding claims, ***characterized in that** a* portion of the plastic material is vaporised with the laser during the processing.

8. The method as claimed in one of the preceding claims, ***characterized in that*** the plastic material is polished with the laser during or after the processing.

9. The method as claimed in one of the preceding claims, ***characterized in that*** the plastic material is processed with the laser at the surface of the plastic material.

10. The method as claimed in one of the preceding claims, ***characterized in that*** the plastic material is also processed with the laser at least in the interior of the plastic material.

11. The method as claimed in one of the preceding claims, ***characterized in that*** the plastic material is irradiated with particle beams, in particular electron beams.

12. The method as claimed in one of the preceding claims, ***characterized in that*** the plastic material is irradiated with photons, in particular gamma radiation.

13. The method as claimed in one of the preceding claims, ***characterized in that*** the plastic material is irradiated with radiation.

14. The method as claimed in one of the preceding claims, ***characterized in that** a* plastic material blank is modified during the laser processing and is then irradiated in a manner such that afterwards, the plastic material again has the material properties of the plastic material blank.

15. A plastic material, in particular an ocular implant or intraocular lens, which has at least one region in which the plastic material has been processed with a laser and therefore at least partially modified, ***characterized in that*** this region has been post-treated in order to crosslink the plastic material again, wherein in this region, the plastic material has been polished after vaporisation of a portion of the plastic material.

## Revendications

1. Procédé pour le traitement de la matière plastique d'un corps en matière plastique, lors duquel la matière plastique est traitée avec un laser et au moins partiellement modifiée, lors du traitement de la matière plastique avec le laser, de la matière plastique est enlevée dans une zone de traitement, la zone de traitement est en même temps ou ensuite polie avec le laser ou un autre laser, ***caractérisé en ce que*** la matière plastique est déréticulée et ensuite irradiée, afin d'obtenir au moins partiellement une nouvelle réticulation de la matière plastique et la matière plastique est irradiée dans cette zone de traitement polie.

2. Procédé selon la revendication *1, **caractérisé en ce que*** la zone de traitement se trouve au niveau de la surface extérieure du corps en matière plastique.

3. Procédé selon l'une des revendications précédentes, ***caractérisé en ce que*** la matière plastique est un acrylate et de préférence un méthacrylate.

4. Procédé selon l'une des revendications précédentes, ***caractérisé en ce que*** la matière plastique est un implant oculaire.

5. Procédé selon l'une des revendications précédentes, ***caractérisé en ce que*** la matière plastique est une aide visuelle telle que notamment une lentille intraoculaire ou une lentille de contact.

6. Procédé selon l'une des revendications précédentes, ***caractérisé en ce que*** le laser est un laser à impulsions ultra-courtes.

7. Procédé selon l'une des revendications précédentes, ***caractérisé en ce que,*** lors du traitement, une partie de la matière plastique est vaporisée par le laser.

8. Procédé selon l'une des revendications précédentes, ***caractérisé en ce que,*** pendant ou après le traitement, la matière plastique est polie avec le laser.

9. Procédé selon l'une des revendications précédentes, ***caractérisé en ce que*** la matière plastique est traitée avec le laser au niveau de la surface de la matière plastique.

10. Procédé selon l'une des revendications précédentes, ***caractérisé en ce que*** la matière plastique est également traitée avec le laser au moins à l'intérieur de la matière plastique.

11. Procédé selon l'une des revendications précédentes, ***caractérisé en ce que*** la matière plastique est irradiée avec des faisceaux de particules, en particulier des faisceaux d'électrons.

12. Procédé selon l'une des revendications précédentes, ***caractérisé en ce que*** la matière plastique est irradiée avec des photons tels que, en particulier, un rayonnement gamma.

13. Procédé selon l'une des revendications précédentes, ***caractérisé en ce que*** la matière plastique est irradiée avec un rayonnement bêta.

14. Procédé selon l'une des revendications précédentes, ***caractérisé en ce q*u**'une ébauche en matière plastique est modifiée lors du traitement au laser et est ensuite irradiée de telle sorte que la matière plastique présente ensuite à nouveau les propriétés matérielles de l'ébauche en matière plastique.

15. Matière plastique, en particulier implant oculaire ou lentille intraoculaire, qui présente au moins une zone dans laquelle la matière plastique a été traitée avec un laser et ainsi au moins partiellement modifiée, ***caractérisée en ce que*** cette zone a été traitée ultérieurement pour réticuler à nouveau la matière plastique, où la matière plastique a été polie dans cette zone après l'évaporation d'une partie de la matière plastique.
